# EUROPÄISCHE PATENTANMELDUNG

(11) **EP 2 439 825 A2**
(43) Veröffentlichungstag der Anmeldung: **11.04.2012**
(21) Anmeldenummer: 11007918.3
(22) Anmeldetag: 29.09.2011
(51) Int. Cl.: H02G 3/06

(54) **Vorrichtung zur zugentlastenden Festlegung von Kabeln**

(30) Priorität: 04.10.2010 DE 102010047239
(71) Anmelder: Lumberg Connect GmbH, 58579 Schalksmühle (DE)
(72) Erfinder: Richter, Michael, 58579 Schalksmühle (DE)
(74) Vertreter: Ostriga, Sonnet, Wirths & Roche

(57) **Zusammenfassung**

Die Erfindung betrifft eine Vorrichtung zur zugentlastenden Festlegung von Kabeln, mit einem Hülsenbauteil, welches in einem ersten Axialbereich ein außenumfängliches Gewinde aufweist und dessen zweiter Axialbereich von Quetschlamellen gebildet ist, welche von einer auf das Gewinde aufzuschraubenden und mit einer Kabeldurchführungsöffnung versehenen Hutmutter gegen die Außenumfangsfläche des festzulegenden Kabels gepresst werden, wobei das Hülsenbauteil in seinem von den Quetschlamellen gebildeten zweiten Axialbereich innenumfänglich mit einem den Innendurchmesser des Hülsenbauteils verengenden Einsatz versehen ist.

## Beschreibung

Vorrichtung zur zugentlastenden Festlegung von Kabeln

Die Erfindung betrifft eine Vorrichtung zur zugentlastenden Festlegung von Kabeln, mit einem Hülsenbauteil, welches in einem ersten Axialbereich ein außenumfängliches Gewinde aufweist und dessen zweiter Axialbereich von Quetschlamellen gebildet ist, welche von einer auf das Gewinde aufzuschraubenden und mit einer Kabeldurchführungsöffnung versehenen Hutmutter gegen die Außenumfangsfläche des festzulegenden Kabels gepresst werden.

Solche Vorrichtungen sind aus dem druckschriftlich nicht belegbaren Stand der Technik hinlänglich bekannt. Es handelt sich häufig um an Anschlussdosen für elektrische Kabel angeordnete Gewindehülsen, deren Quetschlamellen von einer Hutmutter gegen die Außenoberfläche eines durch Hutmutter und Hülse in die Anschlussdose einzuführenden Kabels gepresst werden. So ist das Kabel zugentlastend an der Anschlussdose festgelegt. Diese im Stand der Technik gängigen Vorrichtungen finden sich insbesondere auch an Anschlussdosen für Solarmodule, auf welche die Erfindung selbst vornehmlich zielt.

Beim Aufschrauben der Hutmutter werden die Quetschlamellen unter einer Durchmesserverengung des Hülsebauteils konisch zulaufend zusammengepresst, bis die freien Enden der Quetschlamellen aneinander anliegen. Der Abstand der Quetschlamellen zueinander legt somit die maximale Durchmesserverengung und infolgedessen den minimal von den Quetschlamellen zugentlastend haltenden Kabelaußendurchmesser fest.

Da eine Mindestanzahl von Quetschlamellen für eine zuverlässige Halterung des Kabels erforderlich ist, lässt sich der Abstand der einzelnen Quetschlamellen zueinander jedoch nicht beliebig vermindern. Deshalb ist ein Mindestkabeldurchmesser für eine sichere Festlegung erforderlich.

Insofern besteht im Stand der Technik das Problem, dass gattungsgemäße Vorrichtungen zur zugentlastenden Festlegung von Kabeln in Abhängigkeit vom Innendurchmesser des Hülsenbauteils nur eine gewisse Durchmessertoleranz hinsichtlich der zu haltenden Kabel aufweisen. Da jedoch bei der üblichen Verwendung der Vorrichtung in Zusammenhang mit Anschlussdosen durchaus Kabel mit sehr unterschiedlichen Durchmessern Verwendung finden, ist es Aufgabe der Erfindung, die aus dem Stand der Technik bekannte Vorrichtung dahingehend weiterzubilden, dass sie sich zum Festlegen von Kabeln mit deutlich unterschiedlichen Durchmessern eignet.

Gelöst wird die Aufgabe von einer Vorrichtung mit den Merkmalen des Anspruchs 1, insbesondere mit den kennzeichnenden Merkmalen, wonach das Hülsenbauteil in seinem von den Quetschlamellen gebildeten zweiten Axialbereich innenumfänglich mit einem den Innendurchmesser des Hülsenbauteils verengenden Einsatz versehen ist.

Der wesentliche Vorteil der Erfindung ist darin zu sehen, dass das Einsatzteil den Innendurchmesser des Hülsenbauteils im Bereich der Quetschlamellen verringert und an einen bestimmten, gegenüber dem Hülsenbauteil verringerten Kabeldurchmesser anpasst. Durch Aufschrauben der Hutmutter werden die Quetschlamellen nunmehr gegen das Einsatzteil gepresst. So wird das Einsatzteil, welches eine gewisse Elastizität aufweist, gegen die Außenumfangsfläche des Kabels gedrückt und hält dieses reibschlüssig in der Vorrichtung.

Es ist vorgesehen, dass der den Innenumfang verengende Einsatz eine Dichthülse umfasst, bzw. von einer Dichthülse gebildet ist. Eine solche Hülse würde nicht nur in vorteilhafter Weise den Innenumfang des Hülsenbauteils an das zu haltende Kabel anpassen, sondern würde die Vorrichtung gleichzeitig nach außen hin abdichten. Infolgedessen können Staub, Schmutz und Feuchtigkeit nicht entlang des Kabels und über die Vorrichtung in eine eventuell angeschlossene Anschlussdose gelangen.

Es ist weiterhin vorgesehen, dass der den Innenumfang verengende Einsatz eine selbst wiederum mit Quetschlamellen versehene Haltehülse umfasst. Der Vorteil einer so ausgebildeten Vorrichtung liegt insbesondere darin, dass die Quetschlamellen des Einsatzes eine größere Toleranz hinsichtlich differierender Kabeldurchmesser aufweisen. Zudem gewährleisten die Quetschlamellen des Einsatzes eine sichere Festlegung des Kabels in der Vorrichtung. Im Gegensatz zu den vorhergehenden Ausführungsformen lassen sich mit einem solchen Einsatz Kabel verschiedener Durchmesser halten. Dabei ist vorgesehen, dass die Quetschlamellen des Hülsenbauteils mittel- oder unmittelbar auf die Quetschlamellen der Haltehülsen des Einsatzes wirken.

Besonders bevorzugt ist eine Ausführungsform, die sich dadurch kennzeichnet, dass der den Innenumfang verengende Einsatz von der Dichthülse und der Haltehülse gebildet ist, wobei die Dichthülse die Haltehülse zwischen sich und dem zweiten Axialbereich des Hülsenbauteils anordnet. Diese Ausführungsform verbindet die Vorteile des Einsatzes mit Haltehülse und des Einsatzes mit Dichthülse.

Es ist ferner vorgesehen, dass der zweite Axialbereich des Hülsenbauteils innenumfänglich eine Aufnahme für den Einsatz ausbildet, insbesondere wenn die Aufnahme den Einsatz zumindest gegen eine Axialbewegung in Einschubrichtung eines Kabels in das Hülsenbauteil sichert.

Schließlich ist vorgesehen, dass das Hülsenbauteil Teil einer Anschlussdose für Solarmodule ist.

Die Erfindung wird im Folgenden anhand eines Ausführungsbeispiels erläutert: Es zeigt
- Fig. 1: einen Axialschnitt durch eine Vorrichtung gemäß der Erfindung;

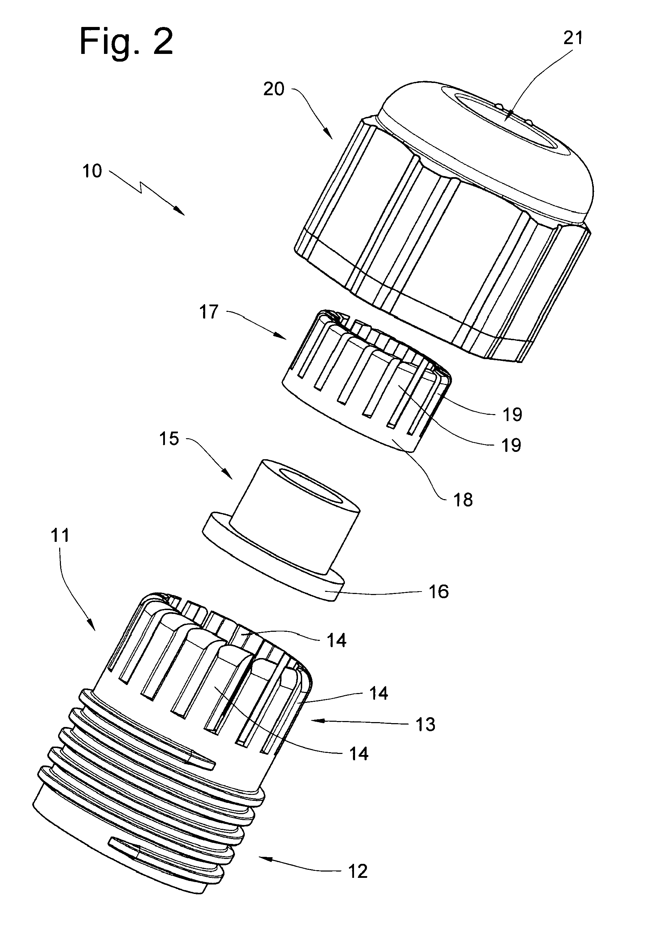

- Fig 2:: eine Explosionsdarstellung der Vorrichtung gemäß Fig. 1.

Eine Vorrichtung zur zugentlastenden Festlegung von Kabeln ist insgesamt mit der Bezugsziffer 10 versehen.

Die Vorrichtung umfasst zunächst ein Hülsenbauteil, welches in seiner Gesamtheit mit der Bezugsziffer 11 bezeichnet ist. Das Hülsenbauteil 11 lässt sich in zwei axiale Bereiche bzw. axiale Abschnitte untergliedern. Der erste axiale Abschnitt 12 ist mit einem außenumfänglichen Gewinde versehen und lässt sich deswegen auch als Gewindeabschnitt 12 bezeichnen. Der zweite axiale Abschnitt 13 wird von Quetschlamellen 14 gebildet und lässt sich insofern auch als Lamellenabschnitt 13 bezeichnen. In der Regel ist das Hülsenbauteil 11 einstückigstoffschlüssiger oder angesetzter bzw. angeformter Bestandteil einer Anschlussdose, insbesondere einer Anschlussdose für Solarmodule.

Die Vorrichtung 10 umfasst ferner eine Dichthülse 15, die in bevorzugter Weise aus einem elastischen Gummimaterial gefertigt ist. Der Innendurchmesser der Dichthülse 15 ist geringer als der des Hülsenbauteils 11. Darüber hinaus ist die Dichthülse 15 im Hülsenbauteil 11 anordenbar, so dass sie den Innendurchmesser des Hülsenbauteils 11 verringert. Die Dichthülse 15 weist außenumfänglich eine Stufe 16 auf, auf welcher eine Haltehülse 17 angeordnet wird. Die Haltehülse 17 ist von einem Ring 18 gebildet, welcher weitere Quetschlamellen 19 trägt.

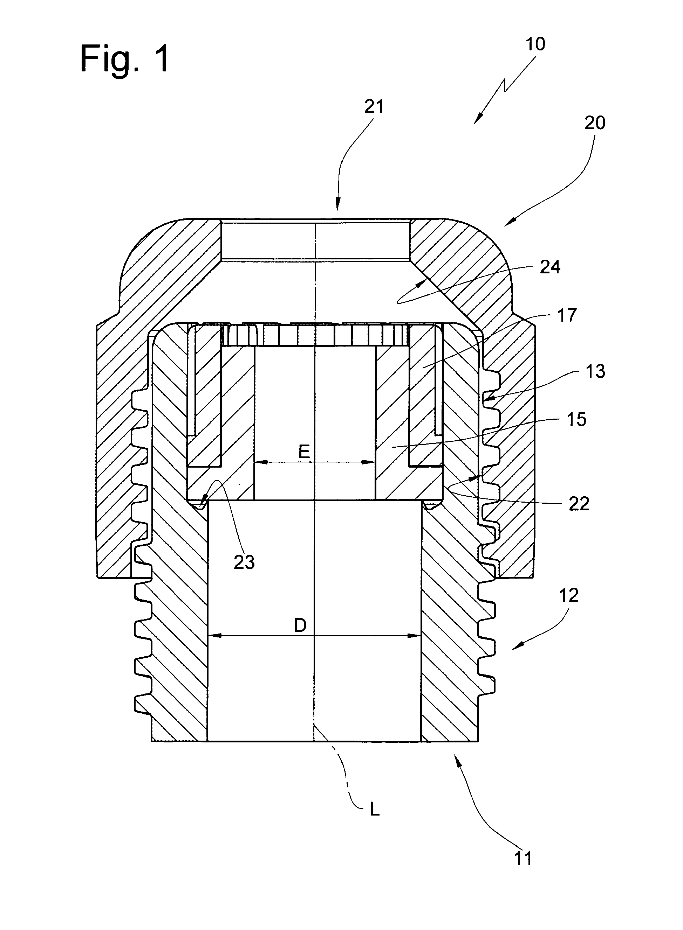

Schließlich gehört zur Vorrichtung 10 noch eine Hutmutter 20, die, axial mit den Hülsenhohlräumen fluchtend, eine Kabeldurchführungsöffnung 21 aufweist. Die Hutmutter 20 ist zum Aufschrauben auf den Gewindeabschnitt 12 des Hülsenbauteils 11 vorgesehen und weist hierzu ein Innengewinde 22 auf, wie Fig. 1 zu entnehmen ist.

Die axial geschnittene Darstellung der Vorrichtung 10 in Fig. 1 zeigt zunächst, dass das Hülsenbauteil 11 einen Innendurchmesser D zur Kabeldurchführung aufweist. Annähernd den gleichen Innendurchmesser weist die Kabeldurchführungsöffnung 21 der Hutmutter 20. Der Innendurchmesser E der Dichthülse ist gegenüber dem Innendurchmesser D des Hülsenbauteils verringert.

Der Fig. 1 ist weiterhin zu entnehmen, dass Haltehülse 17 zwischen Dichthülse 15 und Hülsenbauteil 11 gelagert ist. Dichthülse 15 und Haltehülse 17 bilden zusammen den erfindungsgemäßen, den Durchmesser D verjüngenden Einsatz. Der Lamellenabschnitt 13 des Hülsenbauteils 11 weist innenumfänglich eine Aufnahme 23 in Form einer Stufe für einen Einsatz auf. Die Hutmutter 20 verjüngt sich zwischen ihrem mit Innengewinde 22 versehenden Abschnitt und der Durchgangsöffnung 21 innenumfänglich und bildet so eine Quetschschräge 24 aus.

Wenn der Einsatz, bestehend aus Dichthülse 15 und Haltehüse 17, nicht in der Aufnahme 23 angeordnet ist, wird der maximal vom Hülsenbauteil aufnehmbare Kabeldurchmesser durch den Innendurchmesser D definiert. Der kleinstmögliche Kabeldurchmesser, der noch von den Quetschlamellen 14 des Lamellenabschnitts 13 gehalten werden kann, wird im Wesentlichen durch die maximal mögliche Durchmesserverringerung im Bereich der Quetschlamellen 14 durch Aufschrauben der Hutmutter 20 auf den Gewindeabschnitt 12 definiert und hängt letztlich vom Abstand der Quetschlamellen 14 untereinander ab. Sobald die freien Enden benachbarter Quetschlamellen 14 gegeneinander stoßen, findet in diesem Bereich keine weitere Durchmesserverminderung mehr statt.

Soll die Vorrichtung 10 nunmehr ein Kabel zugentlastend halten, dessen Durchmesser derart gering ist, dass die Quetschlamellen 14 des Hülsenbauteils 11 nicht gegen dessen Außenoberfläche gepresst werden können, wird der Einsatz aus Dichthülse 15 und Haltehülse 17 in die Aufnahme 23 des Hülsenbauteils eingesetzt. Dies vermindert zunächst den maximal aufnehmbaren Kabeldurchmesser auf den Innendurchmesser E der Dichthülse 15. Die Quetschlamellen 14 des Lamellenabschnitts 13 des Hülsenbauteils 11 werden in gewohnter Weise durch Anschlagen an der Quetschschräge 24 der Hutmutter 20 in Richtung einer Längsmittelachse L der Vorrichtung 10 bewegt und drücken ihrerseits die Quetschlamellen 19 der Haltehülse 17 durchmesserverengend zusammen. Diese werden gegen die Außenoberfläche des zu haltenden Kabels gepresst. Der minimal haltbare Kabeldurchmesser wird nun durch die maximale Durchmesserverminderung der Quetschlamellen 19 der Haltehülse 17 definiert. Dieser ist wiederum abhängig vom Abstand der Quetschlamellen 19.

Die eingangs erwähnte Durchmessertoleranz der Vorrichtung 10 beschreibt diejenige Bandbreite an Durchmessern, innerhalb derer der Durchmesser eines Kabels liegen muss, welches zuentlastend festgelegt werden soll.

Bei der Vorrichtung 10 ohne Einsatz wird die Durchmessertoleranz allein vom Hülsenbauteil 11 definiert. Bei im Hülsenbauteil 11 gehaltenen Einsatz definiert der Einsatz die Durchmessertoleranz. Folglich ist die Gesamtdurchmessertoleranz der erfindungsgemäßen Vorrichtung 10 die Summe aus der Durchmessertoleranz des Hülsenbauteils 11 und des Einsatzes. Vorteilhafterweise schließt sich die Durchmessertoleranz des Einsatzes nahtlos an die des Hülsenbauteils an. Die erfindungsgemäße Vorrichtung 10 kann folglich an unterschiedliche Kabeldurchmesser angepasst werden.

### Bezugszeichenliste:

- 10: Vorrichtung
- 11: Hülsenbauteil
- 12: erste axiale Abschnitt / Gewindeabschnitt
- 13: zweiter axialer Abschnitt / Lamellenabschnitt
- 14: Quetschlamellen
- 15: Dichthülse
- 16: Stufe
- 17: Haltehülse
- 18: Ring
- 19: Quetschlamellen
- 20: Hutmutter
- 21: Kabeldurchführungsöffnung
- 22: Innengewinde
- 23: Aufnahme
- 24: Quetschschräge

- D: Innendurchmesser von 11
- E: Innendurchmesser von 15
- L: Längsmittelachse

## Patentansprüche

1. Vorrichtung 10 zur zugentlastenden Festlegung von Kabeln, mit einem Hülsenbauteil 11, welches in einem ersten Axialbereich 12 ein außenumfängliches Gewinde aufweist und dessen zweiter Axialbereich 13 von Quetschlamellen 14 gebildet ist, welche von einer auf das Gewinde aufzuschraubenden und mit einer Kabeldurchführungsöffnung 21 versehenen Hutmutter 20 gegen die Außenumfangsfläche des festzulegenden Kabels gepresst werden, **dadurch gekennzeichnet, dass** das Hülsenbauteil 11 in seinem von den Quetschlamellen 14 gebildeten zweiten Axialbereich 13 innenumfänglich mit einem den Innendurchmesser D des Hülsenbauteils 11 verengenden Einsatz versehen ist.

2. Vorrichtung nach Anspruch 1, **dadurch gekennzeichnet, dass** der den Innenumfang D verengende Einsatz eine Dichthülse 15 umfasst.

3. Vorrichtung nach Anspruch 1 oder 2, **dadurch gekennzeichnet, dass** der den Innenumfang D verengende Einsatz eine mit Quetschlamellen 14 versehene Haltehülse 17 umfasst.

4. Vorrichtung nach Anspruch 2 und 3, **dadurch gekennzeichnet, dass** der den Innenumfang D verengende Einsatz von der Dichthülse 15 und der Haltehülse 17 gebildet ist, wobei die Dichthülse 15 die Haltehülse 17 zwischen sich und dem zweiten Axialbereich 13 des Hülsenbauteils 11 anordnet.

5. Vorrichtung nach einem der vorhergehenden Ansprüche, **dadurch gekennzeichnet, dass** der zweite Axialbereich 13 des Hülsenbauteils 11 innenumfänglich eine Aufnahme 23 für den Einsatz ausbildet.

6. Vorrichtung nach Anspruch 6, **dadurch gekennzeichnet, dass** die Aufnahme 23 den Einsatz zumindest gegen eine Axialbewegung in Einschubrichtung eines Kabels in das Hülsenbauteil 11 sichert.

7. Vorrichtung nach einem der vorhergehenden Ansprüche, **dadurch gekennzeichnet, dass** das Hülsenbauteil 11 teil einer Anschlussdose für Solarmodule ist.
